# EUROPÄISCHE PATENTSCHRIFT

(11) **EP 3 493 972 B1**
(45) Veröffentlichungstag und Bekanntmachung des Hinweises auf die Patenterteilung: **21.04.2021**
(21) Anmeldenummer: 17755434.2
(22) Anmeldetag: 03.08.2017
(51) Int. Cl.: B29C 64/165, B33Y 30/00, B33Y 10/00, B29C 64/205

(54) **VORRICHTUNG UND VERFAHREN ZUR HERSTELLUNG WENIGSTENS EINES DREIDIMENSIONALEN SCHICHTKÖRPERS FÜR DIE BAUINDUSTRIE**
DEVICE AND METHOD FOR PRODUCING AT LEAST ONE THREE-DIMENSIONAL LAMINATE FOR THE CONSTRUCTION INDUSTRY
DISPOSITIF ET PROCÉDÉ POUR LA FABRICATION D'AU MOINS UN CORPS STRATIFIÉ TRIDIMENSIONNEL POUR L'INDUSTRIE DE LA CONSTRUCTION

(30) Priorität: 05.08.2016 AT 507222016
(43) Veröffentlichungstag der Anmeldung: 12.06.2019
(73) Patentinhaber: Progress Maschinen & Automation AG, 39042 Brixen (IT); Metallconcept GmbH, 39058 Sarnthein (IT)
(72) Erfinder: WOHLGEMUTH, Kurt, 39058 Sarnthein (IT)
(74) Vertreter: Torggler & Hofinger Patentanwälte
(86) Internationale Anmeldenummer: PCT/EP2017/069690
(87) Internationale Veröffentlichungsnummer: WO 2018/024836

(56) Entgegenhaltungen:
- WO-A2-2005/097476
- CN-U- 203 887 172
- US-A1- 2001 050 448

## Beschreibung

Die Erfindung betrifft eine Vorrichtung zur Herstellung wenigstens eines dreidimensionalen Schichtkörpers für die Bauindustrie aus einer Mehrzahl von auf einer Druckplattform übereinander angeordneten Schichten aus Partikelmaterial.

Weiters soll ein Verfahren zur Herstellung wenigstens eines dreidimensionalen Schichtkörpers für die Bauindustrie mit einer solchen Vorrichtung angegeben werden. Vorrichtungen der eingangs genannten Art zählen bereits zum Stand der Technik und werden beispielsweise in der US 7,104,773 B2 oder CN 203 887 172 U gezeigt. Derartige Vorrichtungen weisen zumindest eine Beschichtungsvorrichtung auf, welche ein Material, wie zum Beispiel Partikelmaterial, auf eine Druckplattform auftragen kann. Das Auftragen kann dabei in Form einer Materialschicht erfolgen. Das zuvor aufgetragene Material wird in weiterer Folge durch einen Druckkopf an örtlich vorbestimmten Bereichen zum Beispiel durch Applizieren eines Bindemittels oder auch durch Einfluss von Wärme aushärtet. Es wird gezeigt, dass nicht nur eine Beschichtungsvorrichtung in der Bewegung des Druckkopfes vorgelagert verwendet wird, sondern zwei Vorrichtungen. Verfährt der Druckkopf zum Beispiel in eine Richtung A, so appliziert eine erste Beschichtungsvorrichtung das Material, verfährt der Druckkopf in Richtung B, so erfolgt die Beschichtung durch eine weitere vorgelagerte Beschichtungsvorrichtung. Somit kann gesagt werden, dass sich der Druckkopf zwischen zwei Beschichtungsvorrichtungen befindet, je nachdem in welche Richtung der Druckkopf verfährt, appliziert eine erste oder eine zweite Beschichtungsvorrichtung das auszuhärtende Material. Dennoch sind die Beschichtungsvorrichtungen und der Druckkopf derart miteinander verbunden, dass die Beschichtungsvorrichtungen bei einer Bewegung des Druckkopfes stets mitgeführt werden. Die Beschichtungsvorrichtungen sind nicht unabhängig voneinander und unabhängig vom Druckkopf beweglich gelagert. Dies kann zu Einschränkungen in der Anwendbarkeit der Vorrichtung und auch zu längeren Taktzeiten bei der Herstellung eines Schichtkörpers führen.

Aufgabe der Erfindung ist es, die vorbeschriebenen Nachteile zu vermeiden und eine gegenüber dem Stand der Technik verbesserte Vorrichtung und auch ein Verfahren anzugeben.

Dies wird bei der erfindungsgemäßen Vorrichtung durch die Merkmale des Anspruchs 1 und durch ein Verfahren mit den Merkmalen des Anspruchs 9 gelöst.

Wenn die zumindest zwei Beschichtungsvorrichtungen und der zumindest eine Druckkopf jeweils relativ zueinander verfahrbar sind, so kann beispielsweise eine der Beschichtungsvorrichtungen mit dem Druckmaterial - einem Partikelmaterial - befüllt werden, während der Druckkopf und die zweite Beschichtungsvorrichtung über der Druckplattform verfahren und ein Druckvorgang durchgeführt wird. Somit ist es möglich, dass die zweite Beschichtungsvorrichtung Partikelmaterial auf der Druckplattform aufträgt, welches darauffolgend durch den Druckkopf an den örtlich vorbestimmten Bereich durch die Applikation von Bindemittel gebunden wird. Muss die zweite Beschichtungsvorrichtung mit Partikelmaterial befüllt werden, so kann die erste Beschichtungsvorrichtung eine weitere Schicht des Partikelmaterials auftragen und der Druckkopf dieses binden. Vor allem bei großvolumigen Schichtkörpern, wie sie vor allem in der Bauindustrie benötigt werden, ist eine große Menge an Partikelmaterial notwendig. Diese große Menge an Partikelmaterial muss in gleichmäßig dimensionierten Schichtdicken auf der Druckplattform oder auf bereits auf der Druckplattform befindliche Schichten von Partikelmaterial aufgetragen werden. Zur Befüllung der Beschichtungsvorrichtungen wird somit aufgrund der großen Menge an Partikelmaterial etwas mehr Zeit benötigt. Eine Befüllung würde somit eine Verzögerung des Druckvorganges mit sich ziehen, weshalb ein unabhängiges Bewegen der Befüllvorrichtungen und des Druckkopfes zum Erreichen hoher Taktgeschwindigkeiten notwendig ist.

Weitere Einzelheiten und Vorteile der vorliegenden Erfindung werden anhand der abhängigen Ansprüche angeführt.

Als besonders vorteilhaft hat es sich herausgestellt, wenn die wenigstens zwei Beschichtungsvorrichtungen und der zumindest eine Druckkopf jeweils ein eigenständiges Antriebsmittel aufweisen. Durch die eigenständigen, unabhängigen Antriebsmittel können die wenigstens eine Beschichtungsvorrichtungen und der zumindest eine Druckkopf nicht nur unterschiedliche Bewegungen durchführen, sondern auch in unterschiedlichen Geschwindigkeiten verfahren. Dies wird zudem ermöglicht, indem die wenigstens zwei Beschichtungsvorrichtungen durch einen Roboter und/oder einen Linearmotor antreibbar sind. Der Roboter weist dabei einen Roboterarm auf, welcher mit je einer Beschichtungsvorrichtung in Kontakt steht und diese über der Druckplattform bewegt. Durch die Präzision des Roboters ist es möglich, gleichmäßige Schichtdicken aufzutragen und Bewegungen in allen drei Raumrichtungen durchzuführen. Der Druckkopf kann auch durch einen weiteren Roboter angetrieben werden, kann aber auch direkt durch eine Antriebseinheit, wie Beispielsweise einen Elektromotor über der Druckplattform verfahren werden.

Vorteilhaft ist auch, dass die wenigstens zwei Beschichtungsvorrichtungen und der wenigstens eine Druckkopf entlang einer Längsführung des wenigstens einen Druckrahmens jeweils relativ zueinander verfahrbar gelagert sind, wobei der wenigstens eine Druckkopf zwischen den wenigstens zwei Beschichtungsvorrichtungen angeordnet ist. Durch die Anordnung des Druckkopfes zwischen den Beschichtungsvorrichtungen und dem Verfahren entlang einer gemeinsamen Längsführung ist stets eine Beschichtungsvorrichtung dem Druckkopf in einer Bewegung entlang der Längsführung vorgelagert und kann somit Partikelmaterial auftragen, welches im Anschluss durch den Druckkopf ausgehärtet wird. Es gibt somit keine "Leerwege" beim Bewegen des Druckkopfes, da bei dessen Bewegungen entlang der Längsführung stets ein Druckvorgang stattfindet. Dadurch, dass das Zurückbewegen einer der wenigstens zwei Beschichtungsvorrichtungen in ihre Befüllposition zur Befüllung - vorzugsweise in einer Eilgeschwindigkeit - und die Bewegung des wenigstens einen Druckkopfes unter Abgabe des wenigstens einen Bindemittels -vorzugsweise in einer Druckgeschwindigkeit - zeitgleich erfolgen, wird der Vorteil der kurzen Taktzeiten zusätzlich ausgebaut.

Vorteilhaft ist dabei, dass das Verfahren zur Herstellung des Schichtkörpers folgende Arbeitsschritte umfasst:
a. Befüllung zumindest einer der wenigstens zwei Beschichtungsvorrichtungen mit Partikelmaterial,
b. Auftragen einer Schicht des Partikelmaterials auf der Druckplattform durch die zumindest eine Beschichtungsvorrichtung,
c. Abgabe wenigstens eines Bindemittels an den örtlich vorbestimmten Bereichen durch den wenigstens einen Druckkopf.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: Vorrichtung mit einem Roboter,
- Fig. 2: Vorrichtung mit zwei Beschichtungsvorrichtungen - schematisch dargestellt,
- Fig. 3a bis 3f: unterschiedliche Bewegungsabläufe der Beschichtungsvorrichtungen und des Druckkopfes,
- Fig. 4: Befüllung des Zwischenspeichers,
- Fig. 5: schematische Darstellung der Bewegungsabläufe des Druckkopfes und der Beschichtungsvorrichtungen und
- Fig. 6: Anordnung aus einer Mehrzahl von Vorrichtungen.

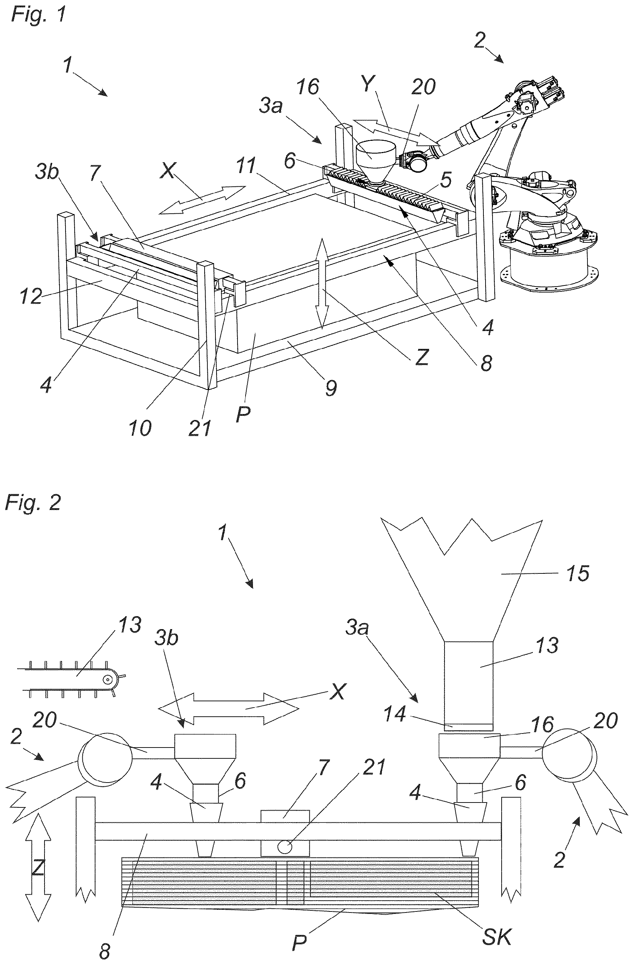

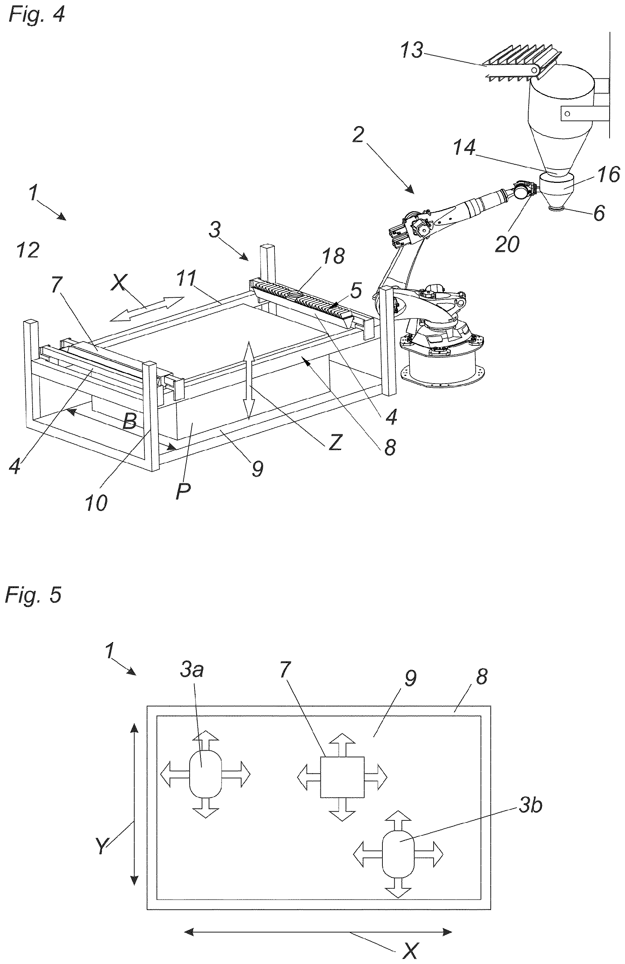

Fig. 1 zeigt die Vorrichtung 1 zur Herstellung wenigstens eines dreidimensionalen Schichtkörpers SK für die Bauindustrie aus einer Mehrzahl von auf einer Druckplattform 9 übereinander angeordneten Schichten aus Partikelmaterial P die an örtlich vorbestimmten Bereichen verfestigt und miteinander zu wenigstens einem dreidimensionalen Schichtkörper SK verbunden sind. Der Druckrahmen 8 ist dabei entlang der Z-Achse (in die Höhe und in die Tiefe) beweglich an zumindest einer Steigführung 10 gelagert. Auf dem Druckrahmen 8 ist die wenigstens eine Beschichtungsvorrichtung 3a, 3b und der zumindest eine Druckkopf 7 beweglich über der Druckplattform 9 gelagert. In anderen Worten: hebt oder senkt sich der Druckrahmen 8 in Richtung der Raumrichtung Z, werden die am Druckrahmen 8 beweglich gelagerte wenigstens eine Beschichtungsvorrichtung 3a, 3b und der zumindest eine Druckkopf 7 mitbewegt. Der Druckrahmen 8 weist zumindest eine Längsführung 11 auf, entlang welcher der Druckkopf 7 bzw. die zumindest eine Beschichtungsvorrichtung 3a, 3b verfahrbar gelagert sind. Die Bewegung des zumindest einen Druckkopfes 7 erfolgt dabei über ein eigenständiges Antriebsmittel 21, der z. B. durch einen Elektromotor oder einem ähnlichen Antriebsmittel mit einer Verzahnung oder einem Riementrieb ausgestaltet werden kann. Es wäre auch denkbar, dass der zumindest eine Druckkopf 7 durch einen eigenständigen Roboterarm 20 eines Roboters 2 bewegt wird. Da die wenigstens zwei Beschichtungsvorrichtungen 3a, 3b und der zumindest eine Druckkopf 7 jeweils ein eigenständiges Antriebsmittel 2, 21 aufweisen, können unterschiedliche Bewegungen im Bereich des Druckrahmens 8 und auch unterschiedliche Geschwindigkeiten beim Verfahren des Druckkopfes 7 und der zumindest zwei Beschichtungsvorrichtungen 3a, 3b realisiert werden. Wenn die wenigstens zwei Beschichtungsvorrichtungen 3a, 3b durch je einen Roboter 2 antreibbar sind, so können unterschiedliche Bewegungen in den drei Raumrichtungen X, Y und Z realisiert werden. So wird in den Raumausrichtungen X, Y durch das Bewegen des Roboters 2 das Partikelmaterial P schichtweise auf der Druckplattform 9 aufgetragen. Die Beschichtungsvorrichtungen 3a, 3b weisen je einen Zwischenspeicher 16 auf. Dieser Zwischenspeicher 16 ist über eine Kupplung 18 (siehe Fig. 4) mit einer Abgabevorrichtung 4 verbunden. Die Abgabevorrichtung 4 ist trichterförmig ausgestaltet und weist an der Unterseite eine Rakel auf, welche das Partikelmaterial P in einer gleichmäßigen Schicht auf der Druckplattform 9 verteilt. Die längsgestreckte, trichterförmige Abgabevorrichtung 4 weist entlang ihrer Längserstreckung eine Öffnung an der Oberseite und auch an ihrer Unterseite auf. An der Öffnung an der Oberseite wird das Partikelmaterial P über den entlang der Abgabevorrichtung 4 beweglich gelagerten Zwischenspeicher 16 in das Innere der Abgabevorrichtung 4 eingestreut. Es kann vorgesehen sein, dass eine Dosiervorrichtung 6 unter dem Zwischenspeicher 16 die notwendige Menge an Partikelmaterial P aus dem Zwischenspeicher 16 in die Abgabevorrichtung 4 abgibt. In weiterer Folge wird das Partikelmaterial P über die untere Öffnung, welche sich entlang der Abgabevorrichtung 4 erstreckt, an die Druckplattform 9 oder bereits auf der Druckplattform 9 befindliche Schichten von Partikelmaterial abgegeben. Die Dosiervorrichtung 6 kann beispielsweise durch eine Klappe oder ein Ventil ausgeführt sein, welches die Durchflussmenge des benötigten Partikelmaterials P regelt oder einfach das Zuführen des Partikelmaterials freigibt oder stoppt. Die Dosiervorrichtung 6 kann beispielsweise elektrisch, pneumatisch oder auch mechanisch angesteuert werden. Die Öffnung entlang der Längserstreckung an der Oberseite der Abgabevorrichtung 4 zum Einstreuen des Partikelmaterials P weist eine flexible Abdeckvorrichtung 5 auf. Der Bereich, welcher nicht durch den Zwischenspeicher 16 abgedeckt wird, wird durch diese flexible Abdeckvorrichtung 5 verschlossen. Somit wird vermieden, dass Partikelmaterial P versehentlich aus der oberen Öffnung der Abgabevorrichtung 4 auf die Druckplattform 9 oder bereits auf der Druckplattform 9 befindliche Schichten von Partikelmaterial P fällt oder durch die Bewegungen der Abgabevorrichtung 4 durch Bewegungen herausgeschleudert oder herausgeblasen wird. In anderen Worten vermeidet de Abdeckvorrichtung einen Austritt von Partikelmaterial P durch äußere Einflüsse. Die Abgabevorrichtung 4 dient nicht nur zur Abgabe des Partikelmaterials P an die darunterliegende Druckplattform 9, sondern auch gleichzeitig als Führung für den daran beweglich gelagerten Zwischenspeicher 16. Somit erfolgt die Führung des Zwischenspeichers 16 entlang der Raumrichtung X über die Längsführung 11, entlang der Raumrichtung Y entlang der als Führung ausgebildeten oder mit einer Führung versehenen Abgabevorrichtung 4.

Die Fig. 2 zeigt schematisch dargestellt eine Vorrichtung 1 mit einer Beschichtungsvorrichtung 3a und einer Beschichtungsvorrichtung 3b. Die Beschichtungsvorrichtungen 3a, 3b sind voneinander getrennt über Roboterarme 20 in den Raumachsen X, Y und Z antreibbar, bewegbar oder führbar. Ein Behälter 15 dient als Mischer oder als Reservoir für das Partikelmaterial P, welches über eine Füllvorrichtung 13 in den Zwischenspeicher 16 gelangt. Je nach Bedarf wird über eine Ausgabevorrichtung 14 die benötigte Menge an Partikelmaterial P in die Zwischenspeicher 16 abgegeben. Aus dem Zwischenspeicher 16 gelangt über die Dosiervorrichtung 6 das Partikelmaterial P in die Abgabevorrichtung 4. Durch die Bewegungen des Roboterarmes 20 wird das Partikelmaterial P schichtweise auf der Druckplattform 9 verteilt. Die Füllvorrichtung 13 kann auch durch z. B. ein Förderband ausgeführt sein, welches in der Befüllposition BPa, BPb der jeweiligen Beschichtungsvorrichtung 3a, 3b die Zwischenspeicher 16 auffüllt. Nach dem Auftragen der Schicht aus Partikelmaterial P durch die Beschichtungsvorrichtungen 3a, 3b verfährt der Druckkopf 7 über der zuvor aufgetragenen Schicht aus Partikelmaterial P und gibt an örtlich vorbestimmten Bereichen wenigstens ein Bindemittel ab, um das Partikelmaterial P zu verfestigen. Es entsteht somit nach mehrmaligen Wiederholungen des Schichtaufbaus und Verfestigung an den örtlich vorbestimmten Bereichen ein Schichtkörper SK.

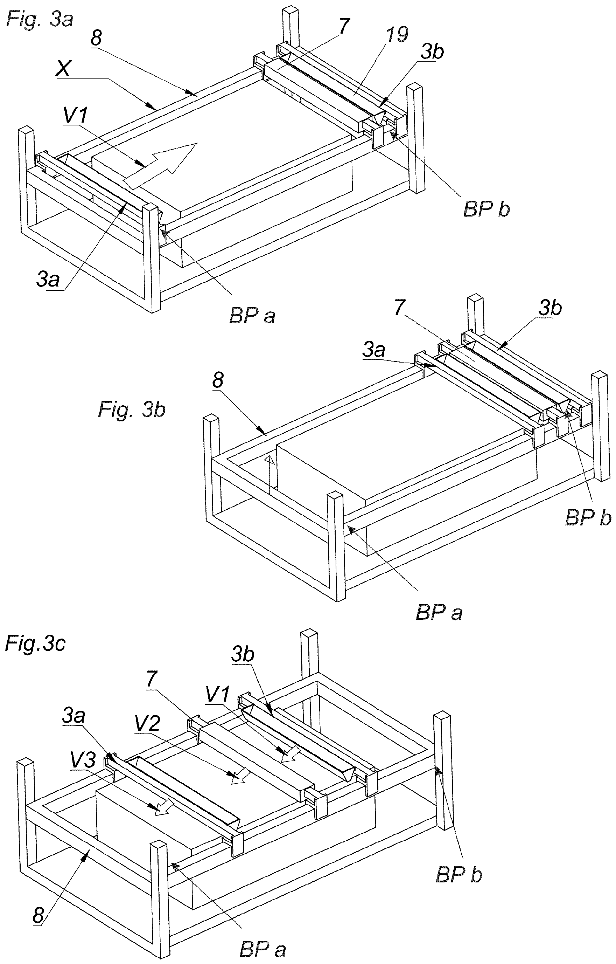

Fig. 3a zeigt, wie die Beschichtungsvorrichtung 3a mit einer Materialauftragsgeschwindigkeit V1 eine Schicht des Partikelmaterials P aufträgt, während der Druckkopf 7 in seiner Position verharrt und die zweite Beschichtungsvorrichtung 3b in ihrer Befüllposition BPb verharrt, um mit Partikelmaterial P befüllt zu werden.

Fig. 3b zeigt, dass die Beschichtungsvorrichtung 3a bei dem Druckkopf 7 angekommen ist und auf ihrem Weg dorthin eine Schicht von Partikelmaterial P aufgetragen hat. Die zweite Beschichtungsvorrichtung 3b wurde bereits in der Befüllposition BPb mit Partikelmaterial P befüllt. Der Druckkopf 7 und die Beschichtungsvorrichtungen 3a, 3b werden nun über den wenigstens einen Druckrahmen 8 um eine vorbestimmte Strecke angehoben, um die Dicke der Schicht des Partikelmaterials P einzustellen. Vorzugsweise beträgt diese Strecke zum Anheben des Druckrahmens 8 zwischen 2mm bis 15 mm, besonders bevorzugt zwischen 8mm und 12 mm.

Fig. 3c zeigt, wie die Beschichtungsvorrichtung 3a mit einer Eilgeschwindigkeit V3 in ihre Befüllungsposition BPa zurückfährt. Der Druckkopf 7 verfährt mit einer geringeren Geschwindigkeit, der Druckgeschwindigkeit V2, zeitgleich in dieselbe Richtung wie die Beschichtungsvorrichtung 3a. Die zweite Beschichtungsvorrichtung 3b verfährt zu diesem Zeitpunkt mit einer Materialauftragsgeschwindigkeit V1 in dieselbe Richtung, wie der Druckkopf 7. Dabei wird die nächste Schicht des Partikelmaterials P aufgetragen.

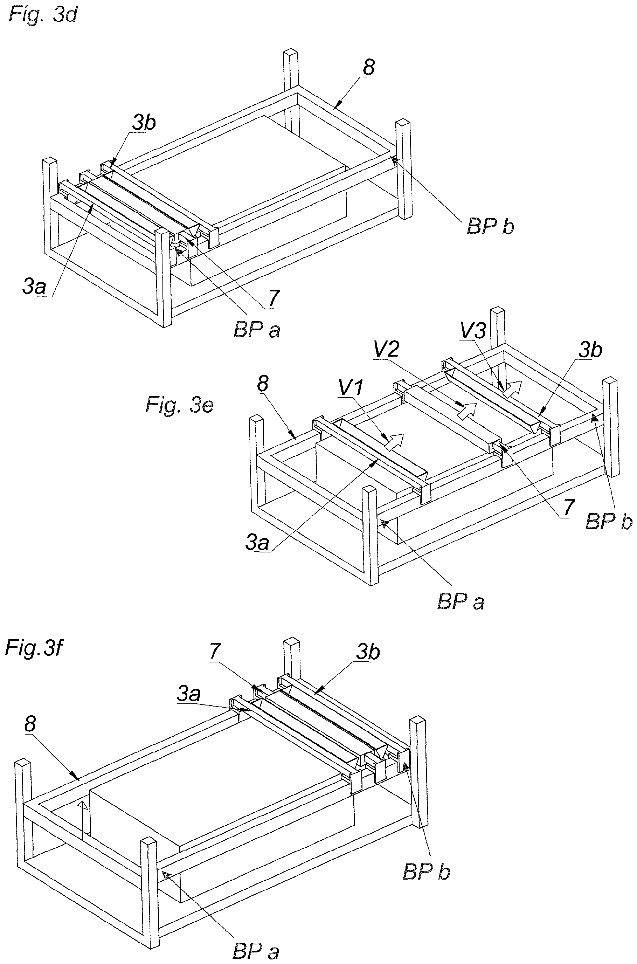

In Fig. 3d wird gezeigt, wie der zumindest eine Druckrahmen 8 wieder um zumindest die Höhe der zuletzt aufgetragenen Schicht nach oben gefahren wird, um den nächsten Arbeitsprozess einleiten zu können. Die Beschichtungsvorrichtung 3a befindet sich in ihrer Befüllposition BPa und wird oder wurde bereits mit dem Partikelmaterial P befüllt.

Fig. 3e zeigt, wie die Beschichtungsvorrichtung 3b mit Eilgeschwindigkeit V3 in ihre Befüllposition BPb zurückfährt. In dieselbe Richtung verfährt auch der Druckkopf 7 mit der Druckgeschwindigkeit V2, gefolgt von der Beschichtungsvorrichtung 3a, welche mit der Materialauftragsgeschwindigkeit V1 verfährt. Dabei wird die nächste Schicht an Partikelmaterial P aufgetragen.

Die Fig. 3f zeigt die Beschichtungsvorrichtung 3b in ihrer Befüllposition BPb. Der zumindest eine Druckrahmen 8 wird in dieser Position erneut um die Schichtdicke, welche zuvor aufgetragen worden ist, angehoben. Der nächste Druckvorgang kann eingeleitet werden, es wiederholen sich die Arbeitsschritte wie in der Fig. 3b bis zur Fig. 3f erklärt, um einen Schichtkörper SK aufzubauen.

Zu den Fig. 3a bis 3f ist zu sagen, dass die wenigstens zwei Beschichtungsvorrichtungen 3a, 3b und der wenigstens eine Druckkopf 7 im Zuge des Verfahrens jeweils relativ zueinander verfahren werden, vorzugsweise entlang zumindest einer Längsführung 11. Die wenigstens zwei Beschichtungsvorrichtungen 3a, 3b können dabei zur Befüllung mit Partikelmaterial P im Bereich des wenigstens einen Druckrahmens 8 in jeweils eine Befüllposition BPa, BPb verfahren werden. Dabei werden die wenigstens zwei Beschichtungsvorrichtungen 3a, 3b ausschließlich durch Roboter 2 bewegt. Dies ist zudem auch in Fig. 2 ersichtlich. Dabei ist vorgesehen, dass das schichtweise Auftragen von Partikelmaterial P auf der Druckplattform 9 oder auf bereits auf der Druckplattform 9 befindliche Schichten durch eine der wenigstens zwei Beschichtungsvorrichtungen 3a, 3b, vorzugsweise in einer Materialauftragsgeschwindigkeit V1, und die Bewegung des wenigstens einen Druckkopfes 7 unter Abgabe des wenigstens einen Bindemittels - vorzugsweise in einer Druckgeschwindigkeit V2 - zeitgleich erfolgen. Weiters ist vorgesehen, dass das Zurückbewegen einer der wenigstens zwei Beschichtungsvorrichtungen 3a, 3b in ihre Befüllpositionen BPa zur Befüllung - vorzugsweise in einer Eilgeschwindigkeit V3 - und die Bewegung des wenigstens einen Druckkopfes 7 unter Abgabe des wenigstens einen Bindemittels - vorzugsweise in einer Druckgeschwindigkeit V2 - zeitgleich erfolgt. Es ist auch vorgesehen, dass die Eilgeschwindigkeit V3 höher ist als die Druckgeschwindigkeit V2 und/oder die Druckgeschwindigkeit V2 höher ist als die Materialauftragsgeschwindigkeit V1. So werden die kurzen Taktzeiten und auch die große Menge an Materialauftrag durch Partikelmaterial P erreicht, welche zur Herstellung von Schichtkörpern SK für die Bauindustrie notwendig sind. Die Vorrichtung 1 sollte nicht nur für die Herstellung von Prototypen oder ähnlichem anwendbar sein, wie übliche 3D Druckvorrichtungen. Die Vorrichtung 1 kann aufgrund ihrer kurzen Taktzeiten Serienprodukte für die Bauindustrie herstellen.

Die Fig. 4 zeigt, wie der Zwischenspeicher 16 durch den Roboterarm 20 des Roboters 2 von der Kupplung 18 entfernt werden kann, um diesen durch eine Füllvorrichtung 13 befüllen zu können. Die Füllvorrichtung 13, in diesem Ausführungsbeispiel als Förderband ausgebildet, fördert Material in einen Trichter, an dessen Unterseite eine Ausgabevorrichtung 14 angeordnet ist. Dieser gibt die notwendige Menge an Partikelmaterial P an den Zwischenspeicher 16 ab. Durch die Dosiervorrichtung 6 wird zudem verhindert, dass das Partikelmaterial P auf dem Weg von der Befüllung zur Kupplung 18 aus dem Zwischenspeicher 16 fällt. Nach der Befüllung des Zwischenspeichers 16 wird der Zwischenspeicher 16 wieder durch den Roboterarm 20 zur Kupplung 18 bewegt und dort mit der Abgabevorrichtung 4 verbunden. Das im Zwischenspeicher 16 befindliche Material kann nun in die Abgabevorrichtung 4 umgelagert werden. Die Fig. 4 zeigt zur Vereinfachung nur einen Roboter 2, es können jedoch mehrere Roboter 2 und auch mehrere Zwischenspeicher 16 zum Einsatz kommen.

Die Fig. 5 zeigt schematisch dargestellt die Bewegungsabläufe der Beschichtungsvorrichtungen 3a, 3b entlang der Raumrichtungen X, Y. Nicht dargestellt ist die Bewegung in die Raumrichtung Z, in der der Druckrahmen 8 nach oben und unten bewegbar ist. Dies wird in den Figuren 1 und 2 gezeigt. Positionen entlang der Raumrichtungen X, Y der Beschichtungsvorrichtungen 3a, 3b sind relativ zueinander unabhängig durch die Roboterarme 20 frei wählbar. Jede Beschichtungsvorrichtung 3a, 3b für sich weist eine eigene Verbindung zu einem eigenen Roboterarm 20 auf. Die Position des Druckkopfes 7 ist unabhängig von der Position der Beschichtungsvorrichtungen 3a, 3b entlang der Raumrichtungen X, Y wählbar. Somit können die Beschichtungsvorrichtungen 3a, 3b voneinander unabhängig das Partikelmaterial P auf der Druckplattform 9 verteilen. In weiterer Folge wird das Partikelmaterial P durch den Druckkopf 7 unter Abgabe des zumindest einen Bindemittels verfestigt. Zudem ist vorgesehen, dass die wenigstens zwei Beschichtungsvorrichtungen 3a, 3b und der wenigstens eine Druckkopf 7 gleichzeitig mit unterschiedlichen Geschwindigkeiten V1, V2, V3 verfahrbar sind.

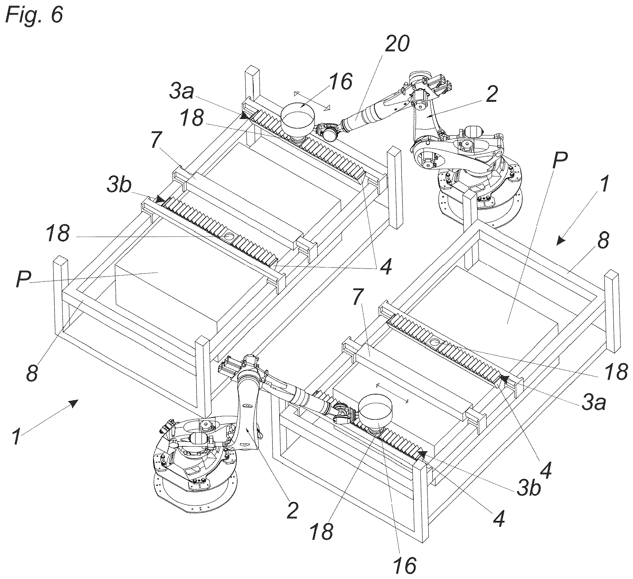

Die Fig. 6 zeigt, wie mehrere Roboter 2 mehrere Vorrichtungen 1 bedienen. In diesem Ausführungsbeispiel werden zwei Vorrichtungen 1 nebeneinander angeordnet gezeigt, neben welchen zwei Roboter 2 angeordnet sind. Deren Roboterarme 20 sind mit den Zwischenspeicher 16 verbunden oder verbindbar. Somit kann ein Roboter 2 mit seinem Roboterarm 20 einen Zwischenspeicher 16 von einer Abgabevorrichtung 4 über die Kupplung 18 entkoppeln und auf eine andere Abgabevorrichtung 4 einer anderen Vorrichtung 1 aufsetzen. Somit kann ein Roboter 2 die Befüllung von mehreren Beschichtungsvorrichtungen 3a, 3b durchführen. Ein Roboter 2 ist in der Lage, alternierend auf unterschiedlichen Vorrichtungen 1 die Befüllung bzw. die Bewegungsabläufe der Beschichtungsvorrichtungen 3a, 3b durchzuführen.

## Patentansprüche

1. Vorrichtung (1) zur Herstellung wenigstens eines dreidimensionalen Schichtkörpers (SK) für die Bauindustrie aus einer Mehrzahl von auf einer Druckplattform (9) übereinander angeordneter Schichten aus Partikelmaterial (P), die in örtlich vorbestimmten Bereichen verfestigt und miteinander zum wenigstens einen dreidimensionalen Schichtkörpers (SK) verbunden sind, umfassend
- wenigstens einen Druckrahmen (8),
- wenigstens zwei Beschichtungsvorrichtungen (3a, 3b) zur schichtweisen Auftragung des Partikelmaterials (P) auf der Druckplattform (9), wobei die wenigstens zwei Beschichtungsvorrichtungen (3a, 3b) am wenigstens einen Druckrahmen (8), vorzugsweise entlang zumindest einer Längsführung (11), beweglich gelagert sind, und
- wenigstens einen Druckkopf (7) zur Abgabe wenigstens eines Bindemittels an den örtlich vorbestimmten Bereichen, wobei der wenigstens eine Druckkopf (7) am wenigstens einen Druckrahmen (8), vorzugsweise entlang zumindest einer Längsführung (11), beweglich gelagert ist,
**dadurch gekennzeichnet, dass** die zumindest zwei Beschichtungsvorrichtungen (3a, 3b) und der zumindest eine Druckkopf (7) jeweils relativ zueinander verfahrbar sind.

2. Vorrichtung nach Anspruch 1, **dadurch gekennzeichnet, dass** der wenigstens eine Druckrahmen (8) in vertikaler Richtung (Z) beweglich an zumindest einer Steigführung (10) gelagert ist, so dass bei einer Bewegung des wenigstens einen Druckrahmens (8) in diese Richtung (Z) die am wenigstens einen Druckrahmen (8) beweglich gelagerten wenigstens zwei Beschichtungsvorrichtungen (3a, 3b) und der wenigstens eine Druckkopf (7) mitbewegbar sind.

3. Vorrichtung nach Anspruch 1 oder 2, **dadurch gekennzeichnet, dass** die wenigstens zwei Beschichtungsvorrichtungen (3a, 3b) und der zumindest eine Druckkopf (7) jeweils ein eigenständiges Antriebsmittel (2, 21) aufweisen.

4. Vorrichtung nach einem der Ansprüche 1 bis 3, **dadurch gekennzeichnet, dass** die wenigstens zwei Beschichtungsvorrichtungen (3a, 3b) durch einen Roboter (2) und/oder einen Linearmotor antreibbar sind.

5. Vorrichtung nach einem der Ansprüche 1 bis 4, **dadurch gekennzeichnet, dass** die wenigstens zwei Beschichtungsvorrichtungen (3a, 3b) einen Zwischenspeicher (16) aufweisen, wobei der Zwischenspeicher (16) in einer Befüllungsposition (BPa, BPb), welche vorzugsweise entlang der Längsführung (11) ausgebildet ist, mit dem Partikelmaterial (P) befüllbar ist.

6. Vorrichtung nach Anspruch 5, **dadurch gekennzeichnet, dass** während einer Befüllung des Zwischenspeichers (16) einer ersten der wenigstens zwei Beschichtungsvorrichtungen (3a, 3b) die andere der wenigstens zwei Beschichtungsvorrichtungen (3a, 3b) zum Auftragen von Partikelmaterial (P) bewegbar ist.

7. Vorrichtung nach einem der Ansprüche 1 bis 6, **dadurch gekennzeichnet, dass** die wenigstens zwei Beschichtungsvorrichtungen (3a, 3b) und der wenigstens eine Druckkopf (7) gleichzeitig mit unterschiedlichen Geschwindigkeiten (V1, V2, V3) verfahrbar sind.

8. Vorrichtung nach einem der Ansprüche 1 bis 7, **dadurch gekennzeichnet, dass** die wenigstens zwei Beschichtungsvorrichtungen (3a, 3b) und der wenigstens eine Druckkopf (7) entlang einer Längsführung (11) des wenigstens einen Druckrahmens (8) jeweils relativ zueinander verfahrbar gelagert sind, wobei der wenigstens eine Druckkopf (7) zwischen den wenigstens zwei Beschichtungsvorrichtungen (3a, 3b) angeordnet ist.

9. Verfahren zur Herstellung wenigstens eines dreidimensionalen Schichtkörpers (SK) für die Bauindustrie mit einer Vorrichtung nach einem der Ansprüche 1 bis 8, **dadurch gekennzeichnet, dass** die wenigstens zwei Beschichtungsvorrichtungen (3a, 3b) und der wenigstens eine Druckkopf (7) im Zuge des Verfahrens jeweils relativ zueinander verfahren werden, vorzugsweise entlang zumindest einer Längsführung (11).

10. Verfahren nach Anspruch 9 beinhaltend folgende Arbeitsschritte:
a. Befüllung zumindest einer der wenigstens zwei Beschichtungsvorrichtungen (3a, 3b) mit Partikelmaterial (P),
b. Auftragen einer Schicht des Partikelmaterials (P) auf der Druckplattform (9) durch die zumindest eine Beschichtungsvorrichtung (3a, 3b),
c. Abgabe wenigstens eines Bindemittels an den örtlich vorbestimmten Bereichen durch den wenigstens einen Druckkopf (7).

11. Verfahren nach Anspruch 10, **dadurch gekennzeichnet, dass** vor dem Auftragen der Schicht des Partikelmaterials (P) der wenigstens eine Druckrahmen (8) um eine vorbestimmte Strecke angehoben wird, um die Dicke der Schicht des Partikelmaterials (P) einzustellen, vorzugsweise wobei die Strecke zwischen 2mm bis 15mm, besonders bevorzugt zwischen 8mm und 12mm, liegt.

12. Verfahren nach einem der Ansprüche 9 bis 11, **dadurch gekennzeichnet, dass** die wenigstens zwei Beschichtungsvorrichtungen (3a, 3b) zur Befüllung mit Partikelmaterial (P) im Bereich des wenigstens einen Druckrahmens (8) in jeweils eine Befüllungsposition (BPa, BPb) verfahren werden.

13. Verfahren nach einem der Ansprüche 9 bis 12, **dadurch gekennzeichnet, dass** die wenigstens zwei Beschichtungsvorrichtungen (3a, 3b) ausschließlich durch Roboter (2) bewegt werden.

14. Verfahren nach einem der Ansprüche 9 bis 13, **dadurch gekennzeichnet, dass** das schichtweise Auftragen von Partikelmaterial (P) auf der Druckplattform (9) durch eine der wenigstens zwei Beschichtungsvorrichtungen (3a, 3b) - vorzugsweise in einer Materialauftragsgeschwindigkeit (V1) - und die Bewegung des wenigstens einen Druckkopfes (7) unter Abgabe des wenigstens einen Bindemittels - vorzugsweise in einer Druckgeschwindigkeit (V2) - zeitgleich erfolgen.

15. Verfahren nach einem der Ansprüche 9 bis 14, **dadurch gekennzeichnet, dass** das Zurückbewegen einer der wenigstens zwei Beschichtungsvorrichtungen (3a, 3b) in ihre Befüllposition (BPa) zur Befüllung - vorzugsweise in einer Eilgeschwindigkeit (V3) - und die Bewegung des wenigstens einen Druckkopfes (7) unter Abgabe des wenigstens einen Bindemittels -vorzugsweise in einer Druckgeschwindigkeit (V2) - zeitgleich erfolgen.

16. Verfahren nach Anspruch 14 und/oder 15, **dadurch gekennzeichnet, dass** die Eilgeschwindigkeit (V3) höher ist als die Druckgeschwindigkeit (V2) und/oder die Druckgeschwindigkeit (V2) höher ist als die Materialauftragsgeschwindigkeit (V1).

## Claims

1. Apparatus (1) for producing at least one three-dimensional laminate (SK) for the construction industry from a plurality of layers of particulate material (P), that are arranged in mutually superposed relationship on a printing platform (9) and are consolidated in locally predetermined regions and connected together to form at least one three-dimensional laminate (SK), including
- at least one printing frame (8),
- at least two coating devices (3a, 3b) for layer-wise application of the particulate material (P) on the printing platform (9), wherein the at least two coating devices (3a, 3b) are mounted movably at at least one printing frame (8), preferably along at least one longitudinal guide (11), and
- at least one printing head (7) for the delivery of at least one binding agent at the locally predetermined regions, wherein the at least one printing head (7) is mounted movably at the at least one printing frame (8), preferably along at least one longitudinal guide (11),
**characterised in that** the at least two coating devices (3a, 3b) and the at least one printing head (7) are respectively movable relative to each other.

2. The apparatus according to claim 1 **characterised in that** the at least one printing frame (8) is mounted movably in the vertical direction (Z) at at least one rising guide (10) so that upon a movement of the at least one printing frame (8) in said direction (Z) the at least two coating devices (3a, 3b) mounted movably to the at least one printing frame (8) and the at least one printing head (7) are also movable.

3. The apparatus as set forth in claim 1 or claim 2 **characterised in that** the at least two coating devices (3a, 3b) and the at least one printing head (7) each have a respective autonomous drive means (2, 21).

4. The apparatus as set forth in one of claims 1 through 3 **characterised in that** the at least two coating devices (3a, 3b) are drivable by a robot (2) and/or a linear motor.

5. The apparatus as set forth in one of claims 1 through 4 **characterised in that** the at least two coating devices (3a, 3b) have an intermediate storage means (16), wherein the intermediate storage means (16) can be filled with the particulate material (P) in a filling position (BPa, BPb) which is preferably provided along the longitudinal guide (11), preferably wherein during an operation of filling the intermediate storage means (16) of a first of the at least two coating devices (3a, 3b) the other of the at least two coating devices (3a, 3b) is movable for application of particulate material (P).

6. Apparatus as set forth in claim 5 **characterised in that** during an operation of filling the intermediate storage means (16) of a first of the at least two coating devices (3a, 3b) the other of the at least two coating devices (3a, 3b) is movable for application of particulate material (P).

7. The apparatus as set forth one of claims 1 through 6 **characterised in that** the at least two coating devices (3a, 3b) and the at least one printing head (7) are simultaneously movable at different speeds (V1, V2, V3).

8. The apparatus as set forth in one of claims 1 through 7 **characterised in that** the at least two coating devices (3a, 3b) and the at least one printing head (7) are mounted movably relative to each other respectively along a longitudinal guide (11) of the at least one printing frame (8), wherein the at least one printing head (7) is arranged between the at least two coating devices (3a, 3b).

9. A process for producing at least one three-dimensional laminate (SK) for the construction industry with the apparatus as set forth in one of claims 1 through 8 **characterised in that** the at least two coating devices (3a, 3b) and the at least one printing head (7) are respectively moved relative to each other in the course of the process, preferably along at least one longitudinal guide (11).

10. The process as set forth in claim 9 including the following working steps:
a. filling at least one of the at least two coating devices (3a, 3b) with particulate material (P),
b. applying a layer of the particulate material (P) on the printing platform (9) by the at least one coating device (3a, 3b), and
c. delivering at least one binding agent at the locally predetermined regions by the at least one printing head (7).

11. The process as set forth in claim 10 **characterised in that** prior to application of the layer of particulate material (P) the at least one printing frame (8) is raised by a predetermined distance to adjust the thickness of the layer of particulate material (P), preferably wherein the distance is between 2 mm and 15 mm, particularly preferably between 8 mm and 12 mm.

12. The process as set forth in one of claims 9 through 11 **characterised in that** the at least two coating devices (3a, 3b) are moved into a respective filling position (BPa, BPb) for filling with particulate material (P) in the region of the at least one printing frame (8).

13. The process as set forth in one of claims 9 through 12 **characterised in that** the at least two coating devices (3a, 3b) are moved exclusively by robots (2).

14. The process as set forth in one of claims 9 through 13 **characterised in that** the layer-wise application of particulate material (P) on the printing platform (9) by one of the at least two coating devices (3a, 3b) - preferably at a material application speed (V1) - and the movement of the at least one printing head (7) with delivery of the at least one binding agent - preferably at a printing speed (V2) - are effected at the same time.

15. The process as set forth in one of claims 9 through 14 **characterised in that** the return movement of one of the at least two coating devices (3a, 3b) into its filling position (BPa) for the filling operation - preferably at a rapid speed (V3) - and the movement of the at least one printing head (7) with delivery of the at least one binding agent - preferably at a printing speed (V2) - are effected at the same time.

16. The process as set forth in claim 14 and/or 15 **characterised in that** the rapid speed (V3) is higher than the printing speed (V2) and/or the printing speed (V2) is higher than the material application speed (V1).

## Revendications

1. Dispositif (1) pour la fabrication d'au moins un corps stratifié tridimensionnel (SK) pour l'industrie du bâtiment à partir d'une pluralité de couches de matériau particulaire (P), superposées sur une plate-forme d'impression (9), qui sont solidifiées et reliées entre elles à des endroits prédéterminés afin d'obtenir au moins un corps stratifié tridimensionnel (SK), comprenant
- au moins un châssis d'impression (8),
- au moins deux dispositifs de revêtement (3a, 3b) pour l'application par couches du matériau particulaire (P) sur la plate-forme d'impression (9), dans lequel les au moins deux dispositifs de revêtement (3a, 3b) sont logés de manière mobile au niveau de l'au moins un châssis d'impression (8), de préférence le long d'au moins un guidage longitudinal (11) et
- au moins une tête d'impression (7) pour la distribution d'au moins un liant aux endroits prédéterminés, dans lequel l'au moins une tête d'impression (7) est logée de manière mobile au niveau de l'au moins un châssis d'impression (8), de préférence le long d'au moins un guidage longitudinal (11),
**caractérisé en ce que** les au moins deux dispositifs de revêtement (3a, 3b) et l'au moins une tête d'impression (7) sont mobiles l'un par rapport à l'autre.

2. Dispositif selon la revendication 1, **caractérisé en ce que** l'au moins un châssis d'impression (8) est logé de manière mobile dans la direction verticale (Z) au niveau d'au moins un guidage ascendant (10), de façon à ce que, lors d'un mouvement de l'au moins un châssis d'impression (8) dans cette direction (Z), les au moins deux dispositifs de revêtement (3a, 3b), logés de manière mobile à l'au moins un châssis d'impression (8), et l'au moins une tête d'impression (7) puissent être entraînés.

3. Dispositif selon la revendication 1 ou 2, **caractérisé en ce que** les au moins deux dispositifs de revêtement (3a, 3b) et l'au moins une tête d'impression (7) comprennent chacun un moyen d'entraînement autonome (2, 21).

4. Dispositif selon l'une des revendications 1 à 3, **caractérisé en ce que** les au moins deux dispositifs de revêtement (3a, 3b) peuvent être entraînés par un robot (2) et/ou un moteur linéaire.

5. Dispositif selon l'une des revendications 1 à 4, **caractérisé en ce que** les au moins deux dispositifs de revêtement (3a, 3b) comprennent un réservoir intermédiaire (16), dans lequel le réservoir intermédiaire (16) peut être rempli de matériau particulaire (P) dans une position de remplissage (BPa, BPb) qui est de préférence réalisée le long du guidage longitudinal (11).

6. Dispositif selon la revendication 5, **caractérisé en ce que**, pendant un remplissage du réservoir intermédiaire (16) d'un premier des au moins deux dispositifs de revêtement (3a, 3b), l'autre des au moins deux dispositifs de revêtement (3a, 3b) peut être déplacé pour l'application du matériau particulaire (P).

7. Dispositif selon l'une des revendications 1 à 6, **caractérisé en ce que** les au moins deux dispositifs de revêtement (3a, 3b) et l'au moins une tête d'impression (7) peuvent être déplacés en même temps avec des vitesses (V1, V2, V3) différentes.

8. Dispositif selon l'une des revendications 1 à 7, **caractérisé en ce que** les au moins deux dispositifs de revêtement (3a, 3b) et l'au moins une tête d'impression (7) sont logés de manière mobile entre eux le long d'un guidage longitudinal (11) de l'au moins un châssis d'impression (8), dans lequel l'au moins une tête d'impression (7) est disposée entre les au moins deux dispositifs de revêtement (3a, 3b).

9. Procédé de fabrication d'au moins un corps stratifié tridimensionnel (SK) pour l'industrie du bâtiment, avec un dispositif selon l'une des revendications 1 à 8, **caractérisé en ce que** les au moins deux dispositifs de revêtement (3a, 3b) et l'au moins une tête d'impression (7) sont déplacés relativement entre eux au cours du procédé, de préférence le long d'au moins un guidage longitudinal (11).

10. Procédé selon la revendication 9, comprenant les étapes suivantes :
a. remplissage d'au moins un des au moins deux dispositifs de revêtement (3a, 3b) avec du matériau particulaire (P),
b. application d'une couche de matériau particulaire (P) sur la plate-forme d'impression (9) par l'au moins un dispositif de revêtement (3a, 3b),
c. distribution d'un liant aux endroits prédéterminés par l'au moins une tête d'impression (7).

11. Procédé selon la revendication 10, **caractérisé en ce que**, avant l'application de la couche de matériau particulaire (P), l'au moins un châssis d'impression (8) est soulevé d'une distance prédéterminée, afin d'ajuster l'épaisseur de la couche de matériau particulaire (P), de préférence dans lequel la distance est entre 2 mm et 15 mm, plus particulièrement de préférence entre 8 mm et 12 mm.

12. Procédé selon l'une des revendications 9 à 11, **caractérisé en ce que** les au moins deux dispositifs de revêtement (3a, 3b) sont déplacés chacun vers une position de remplissage (BPa, Bpb) pour le remplissage de matériau particulaire (P) au niveau de l'au moins un châssis d'impression (8).

13. Procédé selon l'une des revendications 9 à 12, **caractérisé en ce que** les au moins deux dispositifs de revêtement (3a, 3b) sont déplacés exclusivement par des robots (2).

14. Procédé selon l'une des revendications 9 à 13, **caractérisé en ce que** l'application par couches du matériau particulaire (P) sur la plate-forme d'impression (9) par un des au moins deux dispositifs de revêtement (3a, 3b) - de préférence à une vitesse d'application de matériau (V1) - et le déplacement de l'au moins une tête d'impression (7) avec la distribution de l'au moins un liant - de préférence à une vitesse d'impression (V2) - ont lieu simultanément.

15. Procédé selon l'une des revendications 9 à 14, **caractérisé en ce que** le retour d'un des au moins deux dispositifs de revêtement (3a, 3b) vers leur position de remplissage (BPa) pour le remplissage - de préférence à une vitesse rapide (V3) - et le déplacement de l'au moins une tête d'impression (7) avec la distribution de l'au moins un liant - de préférence à une vitesse d'impression (V2) - ont lieu simultanément.

16. Procédé selon la revendication 14 et/ou 15, **caractérisé en ce que** la vitesse rapide (V3) est supérieure à la vitesse d'impression (V2) et/ou la vitesse d'impression (V2) est supérieure à la vitesse d'application de matériau (V1).
